(19) **Europäisches Patentamt / European Patent Office / Office européen des brevets**

(11) **EP 3 849 946 B1**

(12) **FASCICULE DE BREVET EUROPEEN**

(45) Date de publication et mention de la délivrance du brevet:
**12.11.2025 Bulletin 2025/46**

(21) Numéro de dépôt: **19783382.5**

(22) Date de dépôt: **12.09.2019**

(51) Classification Internationale des Brevets (IPC):
**C01G 9/00** *(2006.01)*      **C01B 25/37** *(2006.01)*

(52) Classification Coopérative des Brevets (CPC):
**C01G 9/00; C01B 25/37;** C01P 2002/72;
C01P 2004/04

(86) Numéro de dépôt international:
**PCT/MA2019/000005**

(87) Numéro de publication internationale:
**WO 2020/055222 (19.03.2020 Gazette 2020/12)**

(54) **PROCEDE DE FABRICATION D'HYDROGENOPHOSPHATE DE ZINC HYDRATE**

VERFAHREN ZUR HERSTELLUNG VON HYDRATISIERTEM ZINKHYDROGENPHOSPHAT

METHOD FOR PRODUCING HYDRATED ZINC HYDROGEN PHOSPHATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **12.09.2018 FR 1858193**

(43) Date de publication de la demande:
**21.07.2021 Bulletin 2021/29**

(73) Titulaire: **OCP SA**
**Casablanca 20200 (MA)**

(72) Inventeurs:
 • **KHALESS, Khaoula**
  **118 El Jadida (MA)**
 • **DHIBA, Driss**
  **Casablanca 20200 (MA)**
 • **BOULIF, Rachid**
  **Casablanca 20200 (MA)**

(74) Mandataire: **Regimbeau**
**20, rue de Chazelles**
**75847 Paris Cedex 17 (FR)**

(56) Documents cités:
**US-A- 5 482 526**

 • **DATABASE WPI Week 198206, Derwent World Patents Index; AN 1982-10863E, XP002791900**
 • **L. HERSCHKE, V. ENKELMANN, I. LIEBERWIRTH, G. WAGNER: "The role of hydrogen bonding in the crystal structures of zinc phosphates hydrates", CHEM.EUR.J, vol. 10, 4 June 2004 (2004-06-04), Weinheim, pages 2795 - 2803, XP002791901, DOI: 10.1002/ chem.200305693**
 • **S. BACH ,V. R. CELINSKI, M. DIETZSCH, M. PANTHÖFER, R. BIENERT, F. EMMERLING, J. SCHMEDT AUF DER GRÜNE, W. TREMEL: "Thermally Highly Stable Amorphous Zinc Phosphate Intermediates during the Formation of Zinc Phosphate Hydrate", J. AM. CHEM. SOC, vol. 137, no. 6, 20 January 2015 (2015-01-20), pages 2285 - 2294, XP002791902, DOI: 10.1021/ ja5103663**

**Description**

**DOMAINE DE L'INVENTION**

La présente invention concerne un procédé de fabrication d'hydrogénophosphate de zinc hydraté, ainsi qu'un dispositif pour la mise en oeuvre de ce procédé de fabrication.

**ETAT DE LA TECHNIQUE**

Les formes naturelles du phosphate de zinc sont des minéraux rares, parmi lesquelles figurent principalement la Hopéite, de composition chimique $Zn_3(PO_4) \cdot 4H_2O$, ainsi que deux autres formes relativement proches structurellement de la Hopéite que sont la Tarbuttite et la Spencerite, dont les compositions chimiques sont respectivement $Zn_2(PO_4)(OH)$ et $Zn_4(PO_4)_2(OH)_2 \cdot 3H_2O$.

Les phosphates de zinc synthétiques sont quant à eux fabriqués dans des conditions contrôlées pour assurer une reproductibilité satisfaisante des caractéristiques techniques réactionnelles, notamment une bonne qualité du produit final et un rendement réactionnel élevé. Parmi les différentes formes de phosphates de zinc synthétiques figure notamment l'hydrogénophosphate de zinc hydraté $Zn_3(HPO_4)_3 \cdot 3H_2O$.

Le diagramme de phase $P_2O_5$-ZnO-$H_2O$ est relativement complexe car plusieurs phases solides de compositions variables (phosphate d'hydrogène polyhydraté, notamment $Zn_3(PO_4)_2 \cdot 4H_2O$, $ZnHPO_4 \cdot 3H2O$, $ZnHPO_4 \cdot H_2O$, $Zn(H_2PO_4)_2 \cdot 2H_2O$ et $Zn(H_2PO_4)_2 \cdot 1.5H_2O$) dépendent principalement de la concentration initiale de Zinc (Zn) et de Phosphate (P), du pH et de la température de réaction.

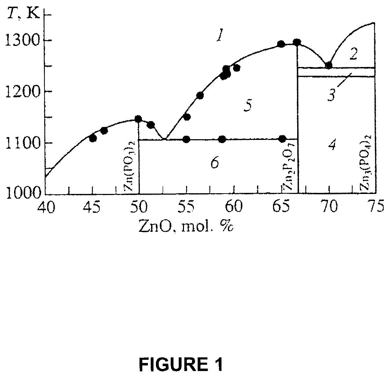

Un diagramme de phase $P_2O_5$-ZnO-$H_2O$ à température ambiante a été élaboré par Eberly et al. [1], puis par Goloshchapov et Filatovato [1] à une température qui varie de 0 à 60°C. Le diagramme de Goloshchapov et Filatovato [1] est représenté sur la figure 1. Il montre les domaines d'existence des différentes phases en fonction de la température réactionnelle et de la fraction molaire d'oxyde de zinc (ZnO) :

(1) liquide,
(2) P-$Zn_3(PO_4)_2$ + liquide,
(3) β-$Zn_3(PO_4)_2$ + β-$Zn_2P_2O_7$,
(4) α-$Zn_3(PO_4)_2$ + β-$Zn_2P_2O_7$,
(5) β-$Zn_2P_2O_7$ + liquide,
(6) β-$Zn_2P_2O_7$ + β-$Zn(PO_3)_2$.

Thermodynamiquement, le phosphate de zinc tétrahydraté $Zn_3(PO_4)_2 \cdot 4H_2O$ est le plus stable dans le diagramme de phase.

Par contre, l'hydrogénophosphate de zinc hydraté $Zn_3(HPO_4)_3 \cdot 3H_2O$ (noté ZHPT) est un produit instable et transitoire dans la réaction de fabrication du phosphate de zinc tétrahydraté $Zn_3(PO_4)_2 \cdot 4H_2O$, de sorte qu'il est très difficile à obtenir et à isoler.

Peu d'études ont été menées jusqu'à présent concernant le ZHPT et le phosphate de zinc tétrahydraté $Zn_3(PO_4)_2 \cdot 4H_2O$. Une première étude a été réalisée par Young et al [2] et a montré que ces deux produits phosphatés partagent des caractéristiques communes telles que les mécanismes de synthèse et la pureté.

Selon cette étude, le ZHPT est obtenu en modifiant légèrement le mode opératoire utilisé pour la synthèse du phosphate de zinc tétrahydraté $Zn_3(PO_4)_2 \cdot 4H_2O$. Le ZHPT est obtenu de la manière suivante : de l'acide phosphorique concentré est placé dans un réacteur, puis neutralisé avec de l'ammoniac. De l'acétate de zinc est ensuite ajouté, suivi par de l'acide nitrique. De la soude est ajoutée goutte à goutte pendant deux jours. Enfin, de la triéthanolamine est ajoutée.

Cette réaction présente l'inconvénient majeur d'être extrêmement lente, puisqu'elle nécessite plus de deux jours.

Une autre étude a été réalisée par Riou et al [3] et a montré que des cristaux de ZHPT sont obtenus par une très lente évaporation à 353K d'un système réactionnel comprenant 30% en masse de $P_2O_5$, 17% en masse de ZnO, et 53% en masse d'eau. Ces cristaux précipitent sous forme d'aiguilles transparentes.

US 5,482,526 décrit une méthode pour préparer un composé de phosphate de zinc anhydre, stable et non-hydroscopique. Elle comprend la formation d'une suspension aqueuse par addition d'acide phosphorique à un composé contenant du zinc qui conduit à la formation de ZnH4P2O8.2H2O et Zn(HPO4).H2O.

JP S56 169113 décrit un procédé de production de phosphate de zinc tétrahydraté par la réaction d'un brut réactionnel obtenu par la réaction d'une source de zinc métallique et d'acide phosphorique dans l'eau à une température comprise entre 40 et 80°C.

## EXPOSE DE L'INVENTION

L'invention a donc pour but de remédier aux inconvénients de l'art antérieur en proposant un procédé de fabrication d'hydrogénophosphate de zinc hydraté $Zn_3(HPO_4)_3 \cdot 3H_2O$, noté ZHPT en abrégé, dans lequel le temps de réaction est fortement réduit par rapport aux procédés de l'état de l'art.

Le procédé proposé vise également à réduire les coûts de production du ZHPT.

Les réductions de temps et de coût permettent au procédé d'être plus adapté aux cadences industrielles élevées.

L'invention vise également à fournir un tel procédé, permettant d'obtenir le ZHPT comme produit final stable, et non en tant qu'intermédiaire réactionnel instable, et avec une pureté élevée.

Un autre but de l'invention est de fournir un dispositif pour la mise en œuvre de ce procédé de fabrication de ZHPT.

A cet effet, l'invention se rapporte à un procédé de fabrication d'hydrogénophosphate de zinc hydraté ($Zn_3(HPO_4)_3$, $3H_2O$) à partir d'oxyde de zinc $ZnO$ et d'acide phosphorique $H_3PO_4$, principalement caractérisé en ce qu'il comprend les étapes suivantes :

- placer l'acide phosphorique dans un réacteur,
- dissolution d'une quantité déterminée d'oxyde de zinc dans l'acide phosphorique pour former un mélange réactionnel, ladite quantité déterminée d'oxyde de zinc étant choisie de manière à avoir un rapport massique entre l'acide phosphorique et l'oxyde de zinc $H_3PO_4$ / $ZnO$ supérieur ou égal à 1,
- malaxer mécaniquement le mélange réactionnel pendant au moins 20 minutes pour former l'hydrogénophosphate de zinc hydraté.

L'ajout d'oxyde de zinc à l'acide phosphorique placé préalablement dans le réacteur, avec un rapport massique entre l'acide phosphorique et l'oxyde de zinc $H_3PO_4$ / $ZnO$, supérieur ou égal à 1, suivi d'un malaxage mécanique du mélange réactionnel, permet de former le ZHPT comme produit réactionnel final et stable, avec un excellent rendement.

En effet, l'ajout d'oxyde de zinc à l'acide phosphorique consiste à incorporer une poudre (l'oxyde de zinc) dans un liquide (l'acide phosphorique), ce qui améliore le mélange de ces deux réactifs en comparaison à l'ajout d'acide phosphorique liquide dans une poudre d'oxyde de zinc, et favorise ainsi la réaction.

Par ailleurs, un rapport massique entre l'acide phosphorique et l'oxyde de zinc $H_3PO_4$ / $ZnO$ supérieur ou égal à 1 permet à la totalité de l'acide phosphorique, présent sous la forme du composé $HPO_4^{2-}$, de réagir avec l'oxyde de zinc, tout en favorisant l'obtention du ZHPT pur c'est-à-dire l'obtention d'une seule phase constituée de ZHPT en fin de réaction.

Le terme « brassage mécanique » signifie que l'acide phosphorique et l'acide de zinc sont mélangés intimement grâce à des moyens mécaniques de malaxage afin de permettre une bonne incorporation de la poudre d'oxyde de zinc dans la solution d'acide phosphorique, et l'obtention d'un mélange réactionnel homogène se présentant sous la forme d'un gel.

Selon d'autres aspects, le procédé proposé présente les différentes caractéristiques suivantes prises seules ou selon leurs combinaisons techniquement possibles :

- le procédé comprend en outre le séchage du mélange réactionnel obtenu en fin de malaxage mécanique ;

- le séchage du mélange réactionnel est effectué à une température comprise entre 40°C et 100°C, de préférence entre 50°C et 60°C ;

- l'acide phosphorique et l'oxyde de zinc sont placés à température ambiante dans le réacteur, et le malaxage du mélange réactionnel est effectué à température ambiante ;

- le temps de malaxage est compris entre 20 minutes et 90 minutes, de préférence entre 20 minutes et 45 minutes ;

- l'oxyde de zinc est ajouté progressivement à l'acide phosphorique ;

- le mélange d'acide phosphorique et d'oxyde de zinc présente un rapport volumique de phase liquide sur phase solide compris entre 0,3 et 2, de préférence entre 0,5 et 2, et de manière davantage préférée entre 0,8 et 1,5 ;

- l'acide phosphorique a un pourcentage massique en pentoxyde de phosphore $P_2O_5$ compris entre 10% et 65%, de préférence entre 45% et 65%, et de manière davantage préférée entre 55% et 61% ;

- l'oxyde de zinc est préalablement conditionné par broyage et raffinage ;

- l'acide phosphorique est issu de l'action d'un acide fort sur du phosphate naturel ;

- l'oxyde de zinc est issu de l'extraction de minerais ou de déchets industriels ;

- le mélange réactionnel est formé par ajout uniquement de l'oxyde de zinc dans l'acide phosphorique.

L'invention se rapporte en outre à un dispositif pour la mise en œuvre du procédé de fabrication d'hydrogénophosphate de zinc hydraté tel que décrit précédemment. Le dispositif comprend un réacteur muni d'une voie d'injection d'oxyde de zinc et d'une voie d'injection d'acide phosphorique distincte de la voie d'injection d'oxyde de zinc, et en amont de la voie d'injection d'oxyde de zinc, un moulin à rouleaux adapté pour broyer l'oxyde de zinc, et une tamiseuse munie d'ouvertures calibrée pour permettre le passage sélectif de particules d'oxyde de zinc broyées d'une taille prédéterminée.

Selon un mode de réalisation, le réacteur comprend un pétrin à crochet rotatif adapté pour malaxer mécaniquement le mélange d'oxyde de zinc et d'acide phosphorique.

Selon un mode de réalisation, le dispositif comprend en outre une électrovanne programmable sur au moins l'une de la voie d'injection d'oxyde de zinc et de la voie d'injection de l'acide phosphorique, l'électrovanne programmable étant configurée pour sélectivement autoriser ou bloquer l'injection d'oxyde de zinc ou d'acide phosphorique dans le réacteur.

## DESCRIPTION DES FIGURES

D'autres avantages et caractéristiques de l'invention apparaîtront à la lecture de la description suivante donnée à titre d'exemple illustratif et non limitatif, en référence aux figures annexées qui représentent :

- la figure 1, un diagramme de phase de $P_2O_5$-ZnO-$H_2O$ réalisé dans une étude de Goloshchapov et Filatovato [1] ;
- la figure 2, une représentation schématique d'un dispositif selon un mode de réalisation pour la mise en oeuvre du procédé de fabrication de ZHPT ;
- la figure 3, un diffractogramme rayons X du ZHPT fabriqué par le procédé de l'invention ;
- les figures 4A et 4B, des vues au microscope électronique à balayage (MEB) du ZHPT fabriqué par le procédé de l'invention, et les figures 4C, 4D, 4E, 4F, et 4G illustrant des diffractogrammes d'analyse dispersive des rayons X de différentes régions du ZHPT représentées sur la figure 4B;
- les figures 5A et 5B des vues au microscope électronique à balayage (MEB) du composé chimique $Zn_3(PO_4)_2$ ;
- la figure 6, un diffractogramme rayons X du produit final obtenu à l'exemple 2 de la description ;
- la figure 7, un diffractogramme rayons X du produit final obtenu à l'exemple 3 de la description.

## DESCRIPTION DETAILLEE DE MODES DE REALISATION DE L'INVENTION

Un premier objet de l'invention concerne un procédé de fabrication de ZHPT à partir d'oxyde de zinc ZnO et d'acide phosphorique $H_3PO_4$ mélangés par des moyens mécaniques de malaxage, sans nécessiter d'additifs c'est-à-dire de substances chimiques supplémentaires autres que ZnO et $H_3PO_4$.

Le ZHPT est classiquement considéré comme un produit intermédiaire instable quand il est formé par les procédés habituels de fabrication de phosphate de zinc tétrahydraté. Thermodynamiquement, c'est le phosphate de zinc tétrahydraté qui est considéré comme étant le plus stable dans le diagramme de phase.

Le procédé de l'invention permet d'obtenir le ZHPT, de préférence à température ambiante, comme produit final stable et pur.

On commence par placer l'acide phosphorique $H_3PO_4$ dans un réacteur. Le réacteur est de préférence à température ambiante.

On ajoute ensuite l'oxyde de zinc dans le réacteur, jusqu'à sa dissolution complète dans l'acide phosphorique, puis on malaxe mécaniquement le mélange obtenu à température ambiante.

En fin de réaction, un séchage du mélange réactionnel permet d'obtenir le ZHPT.

Un premier paramètre de ce procédé étudié par le demandeur est le rapport massique entre l'acide phosphorique et l'oxyde de zinc, noté $H_3PO_4$ / ZnO.

De manière connue en soi, l'oxyde de zinc n'est pas soluble dans l'eau mais il se dissout dans les solutions acides et dans les solutions fortement basiques. L'oxyde de zinc est un composé ionique, formé des ions $Zn^{2+}$ et $O^{2-}$.

En solution acide, l'oxyde de zinc réagit avec les ions $H_3O^+$ selon la réaction (1) :

$$ZnO(sol) + 2\ H_3O^+(aq) = Zn_2+(aq) + 3\ H_2O \qquad (1)$$

En solution basique, l'oxyde de zinc réagit avec les ions $H_3O^+$ selon la réaction (2) :

$$ZnO(sol) + 2\ OH\ (aq) + H_2O = Zn(OH)_4{}^{2-}(aq) \qquad (2)$$

Le demandeur a montré que l'ajout de ZnO (1 gramme) sur l'acide phosphorique pur (0,1M, pH initial égal à 1,68) augmente le pH du mélange. La dissolution de l'oxyde de zinc se traduit en effet par une consommation d'acide et donc par une augmentation de pH. Les essais réalisés sont présentés dans le tableau 1 ci-après.

**Tableau 1** : Influence de l'ajout de ZnO sur le pH d'une solution de $H_3PO_4$ à 0,1M en fonction du temps d'agitation

| Temps d'agitation (min) | pH |
|---|---|
| 30 | 4.55 |
| 60 | 4.52 |
| 90 | 5.45 |
| 120 | 6.25 |
| 150 | 6.89 |

En milieu concentré (61% en masse de $P_2O_5$) et à température ambiante, la dissolution de ZnO est lente, et dure entre 20 minutes et 45 minutes sous malaxage mécanique qui fragilise la liaison Zn-O de l'oxyde de zinc. L'oxyde de zinc passe en solution selon la réaction suivante (3) :

$$ZnO + 2H_3O^+ \rightarrow Zn^{2+} + 3H_2O \qquad (3)$$

Lors de la dissolution de ZnO, l'acide phosphorique (61% $P_2O_5$) devient riche en composés $H_2PO_4{}^-$/$HPO_4{}^{2-}$. Le composé ionique $HPO_4{}^{2-}$ est amphotère, et en milieu acide il joue le rôle d'une base et réagit avec $Zn^{2+}$ selon la réaction suivante (4) :

$$3HPO_4{}^{2-} + 3\ Zn^{2+} + 3H_2O \rightarrow Zn_3(HPO_4)_3, 3H_2O\ (= ZHPT) \qquad (4)$$

L'ajout de l'oxyde de zinc dans l'acide phosphorique améliore le mélange de ces deux substances chimiques, et favorise la formation du cation $Zn^{2+}$ ainsi que l'enrichissement du milieu réactionnel en composé ionique $HPO_4{}^{2-}$, ce qui permet à la réaction (4) de synthèse du ZHPT d'être prédominante dans le milieu réactionnel.

L'oxyde de zinc est de préférence ajouté progressivement à l'acide phosphorique, c'est-à-dire par ajouts successifs continus ou discontinus d'oxyde de zinc. Cet ajout progressif d'une poudre (l'oxyde de zinc) dans un liquide (l'acide phosphorique) permet d'avoir une dissolution régulière de l'oxyde de zinc et donc une formation régulière des ions $Zn^{2+}$ qui sont alors davantage disponibles. Ceci favorise les interactions entre les ions $Zn^{2+}$ et le composé ionique $HPO_4{}^{2-}$, et favorise ainsi la réaction (4) de synthèse du ZHPT.

Le malaxage du mélange réactionnel est de préférence réalisé pendant l'ajout de l'oxyde de zinc, puis éventuellement poursuivi après l'ajout.

Alternativement, le malaxage du mélange réactionnel n'est réalisé qu'après l'ajout de l'oxyde de zinc.

Par ailleurs, dans la réaction (4) de synthèse du ZHPT, le composé ionique $HPO_4{}^{2-}$ et l'ion $Zn^{2+}$ réagissent de manière stœchiométrique. Trois moles de $HPO_4{}^{2-}$ réagissent avec trois moles de $Zn^{2+}$ pour former une mole de ZHPT.

Afin que $HPO_4{}^{2-}$ réagisse en totalité, la quantité d'oxyde de zinc ajoutée dans le réacteur est donc choisie de manière à ce que le rapport massique entre l'acide phosphorique et l'oxyde de zinc $H_3PO_4$ / ZnO, à l'état initial, soit supérieur ou égal à 1, et de préférence environ égal à 1. Le choix de ce rapport massique $H_3PO_4$ / ZnO supérieur ou égal à 1 permet également d'éviter une sursaturation de ZnO par rapport à $H_3PO_4$ dans le milieu réactionnel.

Plus généralement, le demandeur s'est aperçu que le rapport massique $H_3PO_4$ / ZnO influence directement le pH du milieu réactionnel lors de la formation du ZHPT. Pour mesurer le pH, le demandeur a dilué environ 5 grammes de ZHPT dans environ 100 mL d'eau distillée, pour différents échantillons de ZHPT obtenus à partir de valeurs de rapport massique $H_3PO_4$ / ZnO différentes. L'impact du rapport massique $H_3PO_4$ / ZnO sur le pH du milieu réactionnel induit que ce rapport massique a également un impact sur les interactions entre les ions $Zn^{2+}$ et le composé ionique $HPO_4{}^{2-}$, et donc sur la synthèse du ZHPT.

Le demandeur a ainsi observé une augmentation du pH pour des rapports massiques $H_3PO_4$ / ZnO inférieurs à 1, puis une stabilisation du pH à partir d'un rapport massique $H_3PO_4$ / ZnO environ égal à 1. Ces résultats sont en accord avec les résultats précédents détaillés dans le Tableau 1.

Un deuxième paramètre de ce procédé étudié par le demandeur est la concentration d'acide phosphorique dans le mélange réactionnel.

De manière connue en soi, l'acide phosphorique se comporte comme un triacide dont la dissociation dépend des équilibres acido-basiques suivants :

$$H_3PO_4 \text{ (aq)} \leftrightarrow H^+ + H_2PO_4^- \text{ ; } pK_1 = 2,12 \text{ ; } Ka_1 = 7,25 * 10^{-3} \qquad (5)$$

$$H_2PO_4^- \text{ (aq)} \leftrightarrow H^+ + HPO_4^{2-} \text{ ; } pK_2 = 7,20 \text{ ; } Ka_2 = 6,31 * 10^{-8} \qquad (6)$$

$$HPO_4^{2-} \text{ (aq)} \leftrightarrow H^+ + PO_4^{3-} \text{ ; } pK_3 = 12,37 \text{ ; } Ka_3 = 3,98 * 10^{-13} \qquad (7)$$

On déduit de ces équilibres chimiques que l'acide phosphorique n'est pas un acide fort comme l'indique sa première constante de dissociation $Ka_1$ et $pKa_1$. L'acide phosphorique est en effet un acide plus fort que l'acide acétique mais plus faible que l'acide sulfurique et l'acide chlorhydrique.

Le demandeur a montré que le rapport $H_2PO_4^-/H_3PO_4$ augmente de 3,7% à 8,4% puis à 29% molaire pour une concentration initiale $C_0$ en acide phosphorique $H_3PO_4$ (forme neutre) passant de 5,5 mol/L à 1 mol/L puis à 0,1 mol/L, respectivement.

On remarque que le pourcentage molaire de 29% en $H_2PO_4^-$ (le composé $H_2PO_4^-$ est typiquement désigné en tant que « monovalent anionique ») est obtenu à partir de l'acide phosphorique dilué (0,1 mol/L). A cette concentration, la force ionique est faible. Par contre, le pourcentage molaire de 3,7% en $H_2PO_4^-$ est obtenu à partir de l'acide phosphorique concentré (5,5 mol/L). A cette concentration, la force ionique est élevée.

De manière générale, la force ionique est notée I et rend compte de l'activité des ions en solution. Elle se calcule avec la formule suivante :

$$I = \sum_i C_i Z_i^2 \qquad (8)$$

dans laquelle : i est un ion, $C_i$ est la concentration molaire de l'ion i, et $Z_i$ est la charge de l'ion i.

Le tableau 2 suivant présente la distribution de la forme neutre $H_3PO_4$ et du monovalent anionique $H_2PO_4^-$ en fonction de la concentration molaire de l'acide phosphorique Les valeurs indiquées ont été calculées à partir du $pK_1$ de la réaction (5) et de la formule (8) de la force ionique.

Tableau 2 : Distribution de $H_3PO_4$ et $H_2PO_4^-$ en fonction de la concentration de l'acide phosphorique en solution

| Concentration de l'acide phosphorique (mol/L) | 0,12 | 1,2 | 5,9 |
|---|---|---|---|
| $H_3PO_4$ - forme neutre (%) | 81 | 93 | 97 |
| $H_2PO_4^-$ - monovalent anionique (%) | 19 | 7 | 3 |
| Force ionique ($10^{-3}$ mol/L) | 22 | 81 | 187 |

A partir de ces résultats, on déduit qu'une concentration d'acide phosphorique intermédiaire comprise entre 0,5 mol/L et 1,5 mol/L, et en particulier voisine de 1,2 mol/L est préférable, puisqu'elle représente un bon compromis entre la présence du monovalent anionique $H_2PO_4^-$ dans le milieu réactionnel et la force ionique. En effet, à cette concentration, $H_2PO_4^-$ est bien présent en solution et la force ionique est relativement élevée. Une telle concentration en acide phosphorique permet ainsi d'améliorer le rendement de la réaction (4) de synthèse du ZHPT.

Un troisième paramètre de ce procédé étudié par le demandeur est le temps de mélange mécanique, ou malaxage, de l'oxyde de zinc et de l'acide phosphorique.

Pour ce faire, le demandeur a étudié la solubilité de ZnO, $Zn_3(PO_4)_2$ et $ZnSO_4$ dans l'acide phosphorique pur à 61% $P_2O_5$ en fonction du temps.

Les résultats sont présentés dans le tableau 3 ci-après.

| Temps (min) / Produit | 30 | 60 | 90 | Saturation Temps > 4h |
|---|---|---|---|---|
| ZnO (g) | 6,5 | 8 | 9,5 | 14 |
| $Zn_3(PO_4)_2$ (g) (hexa) | 8 | 10,5 | 12 | 17 |
| $ZnSO_4$ (g) | 8 | 8,5 | 10 | 11 |
| $Zn_3(HPO_4)_3$ = ZHPT (g) | 8 | 12 | 14 | 20 |

**Tableau 3 :** Solubilité de ZnO, $Zn_3(PO_4)_2$, $ZnSO_4$ et $Zn_3(HPO_4)_3$, $3H_2O$ dans l'acide phosphorique (61% $P_2O_5$, V = 50 ml)

Le tableau 3 indique que la solubilité d'un cristal augmente lorsqu'il est soumis à une agitation pendant un temps déterminé.

Pour un temps d'agitation supérieur ou égal à 60 minutes, le ZHPT est plus soluble dans l'acide phosphorique que le phosphate de zinc $Zn_3(PO_4)_2$, l'oxyde de zinc ZnO, et le sulfate de zinc $ZnSO_4$.

Ainsi, on choisira de préférence un temps de malaxage de l'oxyde de zinc et de l'acide phosphorique supérieur ou égal à 20 minutes, et de manière davantage préférée supérieur ou égal à 60 minutes.

En particulier, le temps de malaxage est de préférence compris entre 20 minutes et 90 minutes, et de manière davantage préférée entre 20 minutes et 45 minutes.

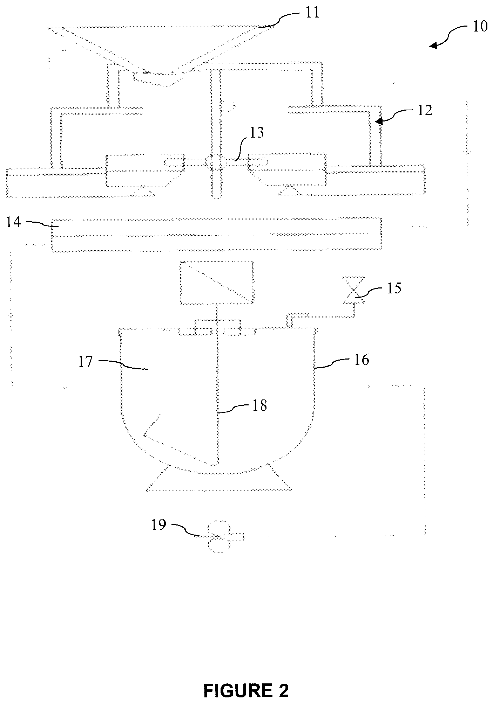

Un mode de réalisation illustrant la mise en œuvre du procédé à l'aide d'un dispositif réactionnel 10 adapté va maintenant être décrit. Le dispositif réactionnel est représenté sur la figure 2.

En introduction de ce qui suit, on précise que l'oxyde de zinc se présente sous la forme d'une poudre blanche insoluble dans l'eau. L'oxyde de zinc peut être issu de l'extraction de minerais ou de déchets industriels.

La poudre d'oxyde de zinc forme une phase solide.

L'acide phosphorique se présente sous la forme d'une solution aqueuse de concentration en pentoxyde de phosphore $P_2O_5$ (dit également anhydride phosphorique) donnée. De préférence, la concentration d'acide phosphorique est comprise entre 10% en masse et 65% en masse de $P_2O_5$, et de manière davantage préférée entre 45% en masse et 65% en masse de $P_2O_5$. L'acide phosphorique peut être issu de l'action d'un acide fort sur du phosphate naturel.

L'acide phosphorique forme une phase liquide.

On commence par acheminer la phase liquide comprenant la solution aqueuse d'acide phosphorique dans un réacteur 16 muni d'une chambre de malaxage 17, représenté sur la figure 2 par un pétrin à crochet rotatif 18.

De préférence, la phase liquide est acheminée vers le réacteur 16 via une électrovanne programmable 15 configurée pour sélectivement autoriser ou bloquer l'injection de la phase liquide dans le réacteur (17). Une telle électrovanne programmable peut également être utilisée pour l'acheminement de la phase solide vers le réacteur.

La phase solide comprenant la poudre d'oxyde de zinc est chargée dans la trémie d'alimentation 11 du dispositif réactionnel 10. Le fond de la trémie est raccordée à un moulin à rouleaux 12 dont les rouleaux 13 permettent de fractionner la phase solide afin d'obtenir une poudre fine d'oxyde de zinc.

La phase solide est ensuite passée dans une tamiseuse 14 afin d'obtenir en sortie des particules de poudre de faible diamètre. Une petite taille particulaire permet d'augmenter la surface de contact solide-liquide, c'est-à-dire entre ZnO et $H_3PO_4$. A titre d'information, la distribution suivante du diamètre des particules a été mesurée par granulométrie laser, dans laquelle D(0,x) = y signifie que x% des particules ont une taille égale ou inférieure à y : D(0,10) = 1,44 $\mu$m ; D(0,20) = 2,43 $\mu$m ; D(0,50) = 8,86 $\mu$m ; D(0,80) = 38, 69 $\mu$m ; D(0,90) = 82,27 $\mu$m.

La phase solide est ensuite acheminée dans le pétrin à crochet rotatif 17 où elle est versée sur la phase liquide. Les phases solide et liquide sont ensuite malaxées à l'aide du crochet rotatif 18 jusqu'à réaction complète et formation du ZHPT.

Le mélange réactionnel obtenu en fin de réaction, à l'aspect fluide fortement visqueux voire pâteux, est alors passé au laminoir 19.

Le mélange réactionnel final est une poudre dont les grains sont liés entre eux par des molécules d'acide. Un rapport volumique de phase liquide/solide compris entre 0,3 et 2, de préférence entre 0,8 et 1,5, et de manière davantage préférée entre 0,5 et 2 permet d'avoir une quantité d'acide phosphorique suffisamment élevée pour hydrater tous les grains de poudre (ne pas faire de grumeau) et pas non plus excessive pour ne pas être en surplus (le surplus d'acide phosphorique ne réagit pas). Dans ces conditions, et avec un malaxage suffisant, le mélange réactionnel final présente une seule phase, qui est une poudre hydratée. De plus, ce mélange apparait homogène à l'œil nu, mais se compose de grains ou cristaux séparés visibles au microscope.

Le mélange réactionnel final est séché à l'étuve. On ajuste de préférence la température afin que le séchage soit le plus rapide possible afin de respecter les cadences de production industrielles, tout en préservant la qualité des cristaux, c'est-à-dire en évitant de faire fondre les cristaux. Ainsi, la température de séchage est avantageusement de quelques dizaines de degrés Celsius en-dessous de la température de fusion des cristaux. Le séchage est de préférence réalisé à une température comprise entre 40°C et 100°C, et de manière davantage préférée entre 50°C et 60°C. De plus, la température peut varier pendant le séchage, de sorte qu'il est par exemple possible d'augmenter la température entre le début et la fin du séchage.

A l'issue du séchage, on obtient un solide de couleur grise, identifié par diffraction aux rayons X et observé par microscopie optique à balayage dans les exemples ci-après.

## EXEMPLES DE SYNTHESE D'HYDROGENOPHOSPHATE DE ZINC HYDRATE

**Exemple 1** : synthèse de $Zn_3(HPO_4)_3$ à partir d'un mélange stœchiométrique de ZnO et de $H_3PO_4$, rapport massique $ZnO/H_3PO_4 = 1$.

Dans un malaxeur mécanique, on place 2g d'acide phosphorique à 61 % $P_2O_5$, auquel on ajoute 2g d'oxyde de zinc. L'oxyde de zinc et l'acide phosphorique sont dans des proportions stœchiométriques, soit 1 : 1 en masse. Le mélange est malaxé pendant 20 minutes, puis envoyé dans un laminoir. On obtient en sortie de laminoir un fluide très visqueux d'apparence pâteuse.

Le fluide visqueux est séché à l'étuve à une température d'environ 80°C pendant 4 heures. On obtient après séchage un produit solide de couleur grise.

On procède ensuite à plusieurs analyses du produit, dont les modes opératoires et les résultats sont détaillés ci-après.

a) Analyse chimique

On procède à une analyse par ICP optique AOES du produit obtenu. La spectrométrie ICP-AOES, pour « Inductively Coupled Plasma - Atomic Emission Spectroscopy » en anglais ou « Plasma à Couplage Inductif - Spectroscopie à Emission Atomique » en français, est une technique analytique permettant de mesurer la teneur d'un élément ou d'un composé chimique dans un échantillon solide préalablement mis en solution dans un acide fort ou dans un mélange d'acides forts.

Pour ce faire, on prépare l'échantillon à analyser en introduisant le produit solide dans un récipient. On ajoute de l'acide perchlorique à 65% puis on recouvre le récipient par exemple avec un verre de montre.

On chauffe le mélange jusqu'à disparition des fumées blanches et clarification, puis on laisse le mélange refroidir jusqu'à température ambiante.

On complète le mélange au trait de jauge du récipient avec de l'eau distillée.

On homogénéise le mélange, puis on filtre.

Les premiers millilitres de solution sont rejetés, et le filtrat est recueilli pour analyse.

L'analyse chimique a montré que le produit obtenu est composé de 38,50% en masse de Zn et 33,50% en masse de PO4. Ces résultats sont présentés dans le tableau 4 ci-après.

**Tableau 4 :** Composition du produit $Zn_3(HPO_4)_3$, $3H_2O$

| Elément | % en masse |
|---------|------------|
| Zn | 38,50 |
| $P_2O_5$ | 33,50 |

b) Diffraction aux rayons X

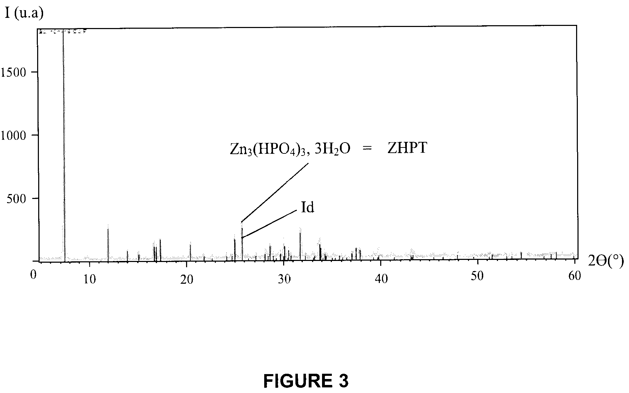

Le produit est analysé par diffraction aux rayons X. Le diffractogramme RX obtenu est représenté sur la figure 3, et exprime l'intensité I du rayonnement reçu, en unité d'aire, en fonction de l'angle de diffraction théta (2Θ).

Le diffractogramme montre que le produit final contient une seule phase, celle-ci étant l'hydrogénophosphate de zinc hydrate ($Zn_3(HPO_4)_3,3H_2O$). Le produit final est donc pur.

Le rendement de la réaction est de 100%.

c) Structure et morphologie

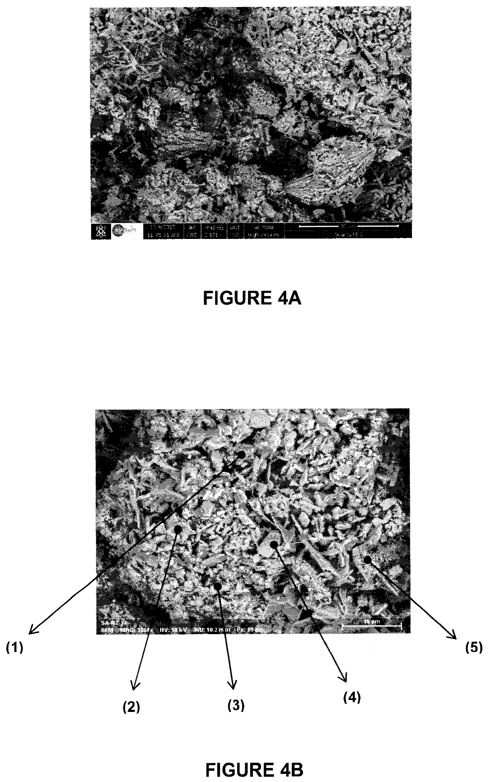

L'observation au microscope électronique à balayage (MEB) couplée à l'analyse dispersive en énergie des rayons X (EDAX) montre que le ZHPT est constitué essentiellement de particules phosphatées de formes régulières sous forme tiges, comme on peut le voir sur les figures 4A et 4B.

Ces tiges sont sillonnées au sommet et présentent de nombreuses ramifications. Elles se présentent sous la forme d'un dôme proche de la forme du fenouil sauvage (« ammi visnaga » en latin).

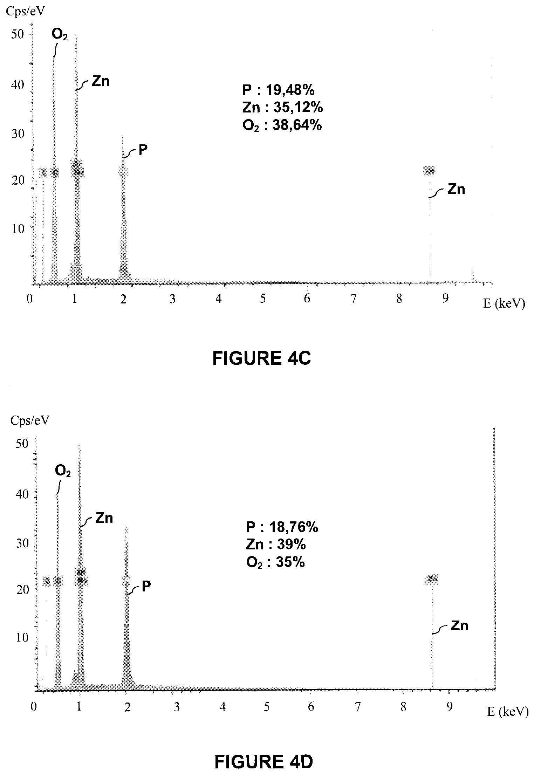

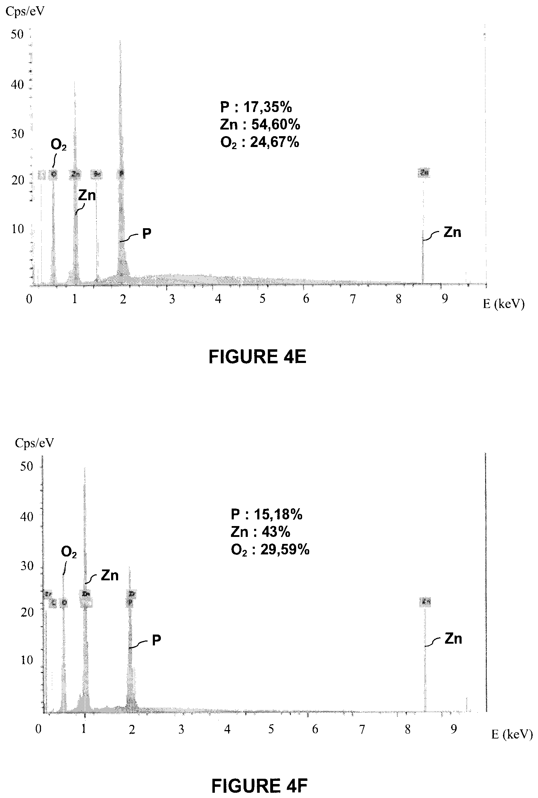

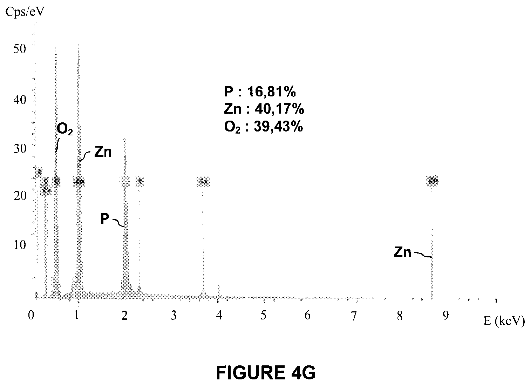

En référence à la figure 4B, le ZHPT est homogène, de sorte que la morphologie et la composition des cristaux ne varie que légèrement en fonction des zones cristallines. Les repères (1), (2), (3), (4) et (5) indiquent cinq zones au niveau desquelles ont été analysés les cristaux par dispersion des rayons X. Les résultats obtenus sont illustrés par les diffractogrammes des figures 4C, 4D, 4E, 4F, et 4G qui correspondent respectivement aux repères (1), (2), (3), (4) et (5), et qui représentent l'intensité du rayonnement en nombre d'électrons par seconde et par électronvolt (count per second per eV, Cps/eV) en fonction de l'énergie E en kilo-électronvolt (keV).

Les mesures des pourcentages massiques en phosphore P, en zinc Zn, et en oxygène $O_2$ confirment les très légères variations de structure cristalline entre les cinq zones de mesure, et donc l'homogénéité cristalline du ZHPT obtenu par le procédé de l'invention.

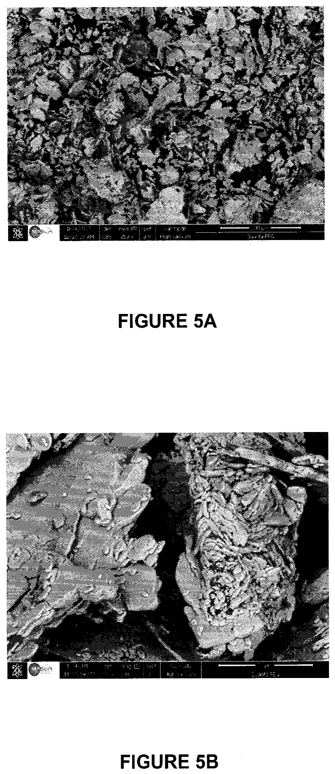

La micrographie MEB du $Zn_3(HPO_4)_3,3H_2O$ est différente de celle de $Zn_3(PO_4)_2$, ainsi que l'illustrent les figures 5A et 5B. On peut voir que les particules de de $Zn_3(PO_4)_2$ adoptent une morphologie irrégulière avec des particules de tailles différentes. On constate également que les particules sont fortement agglomérées. Le système réactionnel a donné lieu au produit $Zn_3(PO_4)_2$, $4H_2O$ sous forme de carrés, de rectangles, ainsi que sous la forme de cristaux en forme de feuille de forme irrégulière.

**Exemple 2 :** synthèse de $Zn_3(HPO_4)_3$ à partir d'un mélange de ZnO et de $H_3PO_4$, rapport massique ZnO/$H_3PO_4$ su-périeur à 1.

On met en oeuvre le procédé de l'exemple 1, dans des conditions expérimentales analogues, à la seule différence que ZnO et de $H_3PO_4$ sont introduits dans des proportions telles que le rapport massique ZnO/$H_3PO_4$ est supérieur à 1.

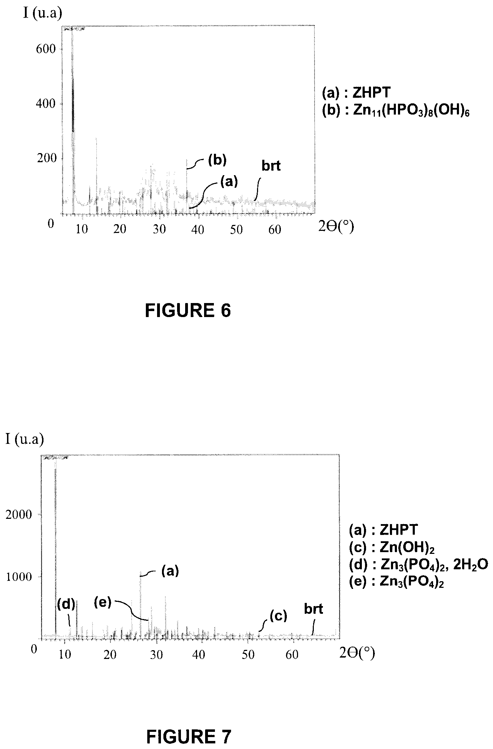

On obtient en fin de réaction un précipité biphasé formé du complexe $Zn(HPO_4)_3$, $3H_2O$ (= ZHPT), et du complexe $Zn_{11}(HPO_3)_8(OH)_6$. La présence de ces deux phases est constatée visuellement ainsi que par diffraction aux rayons X dont le diffractogramme est représenté sur la figure 6, dans lequel le ZHPT est référencé (a) et $Zn_{11}(HPO_3)_8(OH)_6$ est référencé (b). Le bruit est référencé brt.

Par ailleurs, on constate expérimentalement que le phase du complexe $Zn_{11}(HPO_3)_8(OH)_6$ diminue lorsque le rapport massique ZnO/$H_3PO_4$ se rapproche de 1 depuis des valeurs supérieures à 1, jusqu'à disparaitre pour aboutir au système monophasé de l'exemple 1 lorsque le rapport massique ZnO/$H_3PO_4$ est sensiblement égal à 1.

**Exemple 3** : influence de l'ordre d'introduction des réactifs dans le malaxeur.

On met en oeuvre le procédé de l'exemple 1, dans des conditions expérimentales analogues, à la seule différence que l'on place d'abord l'oxyde de zinc dans le malaxeur mécanique, auquel on ajoute l'acide phosphorique.

On obtient en fin de réaction un précipité composé de quatre phases, formé du complexe $Zn_3(HPO_4)_3$, $3H_2O$ (= ZHPT, en quantité majeure), du complexe $Zn(OH)_2$ (en quantité mineure) du complexe $Zn_3(PO_4)_2$, $2H_2O$ (en quantité mineure), et du complexe $Zn_3(PO_4)_2$ (en quantité mineure).

La présence de ces quatre phases est constatée visuellement ainsi que par diffraction aux rayons X dont le diffractogramme est représenté sur la figure 7 dans lequel le ZHPT est référencé (a), $Zn(OH)_2$ est référencé (c), $Zn_3(PO_4)_2$, $2H_2O$ est référencé (d), et $Zn_3(PO_4)_2$ est référencé (e). Le bruit est référencé brt.

Par conséquent, lorsque l'acide phosphorique est ajouté à l'oxyde de zinc, le produit obtenu n'est pas pur puisque la réaction (4) de formation du ZHPT ne prédomine pas en solution. Il est de plus très difficile en pratique de purifier le ZHPT à partir de ce mélange polyphasique.

**Exemple 4 :** influence du temps de malaxage.

On répète plusieurs fois le procédé de l'exemple 1, avec un temps de malaxage de 5 minutes, 10 minutes, 20 minutes, 45 minutes, et 60 minutes, avec un rapport massique ZnO/$H_3PO_4$ égal à 1.

On analyse les produits réactionnels obtenus par diffraction aux rayons X. Les résultats obtenus sont présentés dans le tableau 5 ci-après.

Tableau 5 : Phases obtenues par diffractogramme DRX

| Temps | Phases formées |
|---|---|
| 5 min | $ZnHPO_4$, 3 $H_2O$*** ; $Zn(OH)_2$*; $Zn_3(PO_4)_2$, $2H_2O$ ; |
| 10 min | $ZnHPO_4$, 3 $H_2O$*** ; $Zn(OH)_2$*; $Zn_3(PO_4)_2$, $2H_2O$ ; $Zn_3(PO_4)_2$* |
| 20 min | $Zn_3(HPO_4)_3$, $3H_2O$ = ZHPT |
| 45 min | $Zn_3(HPO_4)_3$, $3H_2O$ |
| 60 min | $Zn_3(HPO_4)_3$, $3H_2O$ |
| *** : phase majeure<br>* : phase mineure | |

Ces résultats montrent qu'une durée de malaxage d'au moins 20 minutes permet d'obtenir un système monophasé, dont l'unique phase correspond à l'hydrogénophosphate de zinc hydrate, et qu'au-delà de 20 minutes ce système monophasé perdure.

Par conséquent, un temps de malaxage compris entre 20 minutes et 45 minutes est nécessaire et suffisant pour obtenir l'hydrogénophosphate de zinc hydrate pur (système monophasé).

## REFERENCES

[1] : F. Lemont, "Procédés hautes températures; de la réactivité des systèmes au developpement et l'optimisation de technologies sensibles", Habilitation à diriger des recherches, Institut National polytechnique de Grenoble.

[2] : J.R. Young, J.M. Didymus, P.R. Brown, S. Mann et al., Nature 356 (1992) 516; (b) K.Henriksen, S.L.S. Stipp, J.R. Young, P.R. Brown, Am. Mineralogist 88 (2003) 2040.

[3] : A. Riou, R. Cudennec, Y. Gernault, « Hydrogénophosphate de zinc hydrate », Acta cryst, (1987), C43, 194-197.

## Revendications

1. Procédé de fabrication d'hydrogénophosphate de zinc hydraté ($Zn_3(HPO_4)_3$, $3H_2O$) à partir d'oxyde de zinc ZnO et d'acide phosphorique $H_3PO_4$, **caractérisé en ce qu'**il comprend les étapes suivantes :

   - placer l'acide phosphorique dans un réacteur,
   - dissolution d'une quantité déterminée d'oxyde de zinc dans l'acide phosphorique pour former un mélange réactionnel, ladite quantité déterminée d'oxyde de zinc étant choisie de manière à avoir un rapport massique entre l'acide phosphorique et l'oxyde de zinc $H_3PO_4$ / ZnO supérieur ou égal à 1,
   - malaxer mécaniquement le mélange réactionnel pendant au moins 20 minutes pour former l'hydrogénophosphate de zinc hydraté.

2. Procédé selon la revendication 1, comprenant en outre le séchage du mélange réactionnel obtenu en fin de malaxage mécanique.

3. Procédé selon la revendication 2, dans lequel le séchage du mélange réactionnel est effectué à une température comprise entre 40°C et 100°C, de préférence entre 50°C et 60°C.

4. Procédé l'une quelconque des revendications précédentes, dans lequel l'acide phosphorique et l'oxyde de zinc sont placés à température ambiante dans le réacteur, et le malaxage du mélange réactionnel est effectué à température ambiante.

5. Procédé selon l'une des revendications précédentes, dans lequel l'oxyde de zinc est ajouté progressivement à l'acide phosphorique.

6. Procédé selon l'une quelconque des revendications précédentes, dans lequel le mélange d'acide phosphorique et d'oxyde de zinc présente un rapport volumique de phase liquide sur phase solide compris entre 0,3 et 2, de préférence entre 0,5 et 2, et de manière davantage préférée entre 0,8 et 1,5.

7. Procédé selon l'une des revendications précédentes, dans lequel l'acide phosphorique a un pourcentage massique en pentoxyde de phosphore $P_2O_5$ compris entre 10% et 65%, de préférence entre 45% et 65%, et de manière davantage préférée entre 55% et 61 %.

8. Procédé selon l'une des revendications précédentes, dans lequel l'oxyde de zinc est préalablement conditionné par broyage et raffinage.

9. Procédé selon l'une des revendications précédentes, dans lequel l'acide phosphorique est issu de l'action d'un acide fort sur du phosphate naturel.

10. Procédé selon l'une des revendications précédentes, dans lequel l'oxyde de zinc est issu de l'extraction de minerais ou de déchets industriels.

11. Procédé selon l'une des revendications précédentes, dans lequel le mélange réactionnel est formé par ajout uniquement de l'oxyde de zinc dans l'acide phosphorique.

12. Dispositif (10) pour la mise en œuvre du procédé de fabrication d'hydrogénophosphate de zinc hydraté selon l'une des revendications précédentes, comprenant un réacteur (17) muni d'une voie d'injection d'oxyde de zinc et d'une voie d'injection d'acide phosphorique distincte de la voie d'injection d'oxyde de zinc, et en amont de la voie d'injection d'oxyde de zinc, un moulin à rouleaux (12) adapté pour broyer l'oxyde de zinc, et une tamiseuse (13) munie d'ouvertures calibrée pour permettre le passage sélectif de particules d'oxyde de zinc broyées d'une taille prédéterminée.

13. Dispositif selon la revendication 12, dans lequel le réacteur (17) comprend un pétrin à crochet rotatif (18) adapté pour malaxer mécaniquement le mélange d'oxyde de zinc et d'acide phosphorique.

14. Dispositif selon l'une des revendications 12 ou 13, comprenant en outre une électrovanne programmable (15) sur au moins l'une de la voie d'injection d'oxyde de zinc et de la voie d'injection de l'acide phosphorique, l'électrovanne programmable (15) étant configurée pour sélectivement autoriser ou bloquer l'injection d'oxyde de zinc ou d'acide phosphorique dans le réacteur (17).

**Patentansprüche**

1. Verfahren zur Herstellung von hydratisiertem Zinkhydrogenphosphat ($Zn_3(HPO_4)_3$, $3H_2O$) aus Zinkoxid ZnO und Phosphorsäure $H_3PO_4$, **dadurch gekennzeichnet, dass** es die folgenden Schritte umfasst:

   - Einbringen der Phosphorsäure in einen Reaktor,
   - Auflösen einer bestimmten Menge an Zinkoxid in der Phosphorsäure, um ein Reaktionsgemisch zu bilden, wobei die bestimmte Menge an Zinkoxid so gewählt wird, dass ein Massenverhältnis zwischen Phosphorsäure und Zinkoxid $H_3PO_4$ / ZnO größer oder gleich 1 ist,
   - mechanisches Mischen des Reaktionsgemisches für mindestens 20 Minuten, um das hydratisierte Zinkhydrogenphosphat zu bilden.

2. Verfahren nach Anspruch 1, das ferner das Trocknen des am Ende des mechanischen Mischens erhaltenen Reaktionsgemisches umfasst.

3. Verfahren nach Anspruch 2, wobei das Trocknen des Reaktionsgemischs bei einer Temperatur zwischen 40 °C und 100 °C, vorzugsweise zwischen 50 °C und 60 °C, durchgeführt wird.

4. Verfahren nach einem der vorstehenden Ansprüche, wobei die Phosphorsäure und das Zinkoxid bei Raumtemperatur in den Reaktor eingebracht werden und das Mischen des Reaktionsgemischs bei Raumtemperatur durchgeführt wird.

5. Verfahren nach einem der vorstehenden Ansprüche, wobei das Zinkoxid der Phosphorsäure nach und nach hinzugegeben wird.

**6.** Verfahren nach einem der vorstehenden Ansprüche, wobei das Gemisch aus Phosphorsäure und Zinkoxid ein Volumenverhältnis von flüssiger Phase zu fester Phase zwischen 0,3 und 2, vorzugsweise zwischen 0,5 und 2 und noch bevorzugter zwischen 0,8 und 1,5 aufweist.

**7.** Verfahren nach einem der vorstehenden Ansprüche, wobei die Phosphorsäure einen Massenanteil an Phosphor-pentoxid $P_2O_5$ zwischen 10 % und 65 %, vorzugsweise zwischen 45 % und 65 % und noch bevorzugter zwischen 55 % und 61 % aufweist.

**8.** Verfahren nach einem der vorstehenden Ansprüche, wobei das Zinkoxid zuvor durch Zerkleinern und Raffinieren aufbereitet wird.

**9.** Verfahren nach einem der vorstehenden Ansprüche, wobei die Phosphorsäure durch Einwirkung einer starken Säure auf natürliches Phosphat gewonnen wird.

**10.** Verfahren nach einem der vorstehenden Ansprüche, wobei das Zinkoxid aus der Gewinnung von Erzen oder Industrieabfällen stammt.

**11.** Verfahren nach einem der vorstehenden Ansprüche, wobei das Reaktionsgemisch durch Hinzufügen von ausschließlich Zinkoxid zu der Phosphorsäure gebildet wird.

**12.** Vorrichtung (10) zur Durchführung des Verfahrens zur Herstellung von hydratisiertem Zinkhydrogenphosphat nach einem der vorstehenden Ansprüche, umfassend einen Reaktor (17), der mit einem Kanal zum Einleiten von Zinkoxid und einem von dem Kanal zum Einleiten von Zinkoxid verschiedenen Kanal zum Einleiten von Phosphorsäure versehen ist, und stromaufwärts des Kanals zum Einleiten von Zinkoxid eine Walzenmühle (12) zum Zerkleinern des Zinkoxids und eine Siebmaschine (13) mit kalibrierten Öffnungen, die den selektiven Durchgang von zerkleinerten Zinkoxidpartikeln einer vorbestimmten Größe ermöglichen.

**13.** Vorrichtung nach Anspruch 12, wobei der Reaktor (17) einen rotierenden Hakenmischer (18) umfasst, der zum mechanischen Mischen des Gemischs aus Zinkoxid und Phosphorsäure geeignet ist.

**14.** Vorrichtung nach einem der Ansprüche 12 oder 13, die ferner ein programmierbares Magnetventil (15) an mindestens einem von dem Kanal zum Einleiten von Zinkoxid und dem Kanal zum Einleiten von Zinkoxid Phosphorsäure umfasst, wobei das programmierbare Magnetventil (15) so ausgelegt ist, dass es die Einleitung von Zinkoxid oder von Phosphorsäure in den Reaktor (17) selektiv freigibt oder blockiert.

**Claims**

**1.** Method for producing zinc hydrogen phosphate hydrate ($Zn_3(HPO_4)_3$, $3H_2O$) from zinc oxide ZnO and phosphoric acid $H_3PO_4$, **characterised in that** it comprises the following steps:

- placing the phosphoric acid in a reactor,
- dissolution of a determined quantity of the zinc oxide in the phosphoric acid to form a reaction mixture, said determined quantity of zinc oxide being chosen so as to have a weight ratio between the phosphoric acid and the zinc oxide $H_3PO_4$ / ZnO greater than or equal to 1,
- mechanically kneading the reaction mixture for at least 20 minutes to form zinc hydrogen phosphate hydrate.

**2.** Method according to claim 1, further comprising the drying of the reaction mixture obtained at the end of mechanical kneading.

**3.** Method according to claim 2, wherein the drying of the reaction mixture is carried out at a temperature comprised between 40°C and 100°C, preferably between 50°C and 60°C.

**4.** Method according to any one of the preceding claims, wherein the phosphoric acid and the zinc oxide are placed at room temperature in the reactor, and the kneading of the reaction mixture is carried out at room temperature.

**5.** Method according to anyone of the preceding claims, wherein the zinc oxide is added progressively to the phosphoric acid.

6. Method according to any one of the preceding claims, wherein the mixture of phosphoric acid and zinc oxide has a volume ratio of liquid phase to solid phase comprised between 0.3 and 2, preferably between 0.5 and 2, and in a more preferred manner between 0.8 and 1.5.

7. Method according to any one of the preceding claims, wherein the phosphoric acid has a weight percentage of phosphorous pentoxide $P_2O_5$ comprised between 10% and 65%, preferably between 45% and 65%, and in a more preferred manner between 55% and 61 %.

8. Method according to any one of the preceding claims, wherein the zinc oxide is conditioned beforehand by milling and refining.

9. Method according to any one of the preceding claims, wherein the phosphoric acid is derived from the action of a strong acid on natural phosphate.

10. Method according to any one of the preceding claims, wherein the zinc oxide is derived from extraction of ores or industrial waste.

11. Method according to one of the preceding claims, wherein the reaction mixture is formed by addition uniquely of zinc oxide to phosphoric acid.

12. Device (10) for the implementation of the method for producing zinc hydrogen phosphate hydrate according to any one of the preceding claims, comprising a reactor (17) provided with a zinc oxide injection path and a phosphoric acid injection path distinct from the zinc oxide injection path and, upstream of the zinc oxide injection path, a roll mill (12) suited for milling zinc oxide, and a sifter (13) provided with openings calibrated to enable the selective passage of milled particles of zinc oxide of a predetermined size.

13. Device according to claim 12, wherein the reactor (17) comprises a rotary hook kneader (18) suited for mechanically kneading the mixture of zinc oxide and phosphoric acid.

14. Device according to one of claims 12 or 13, further comprising a programmable solenoid valve (15) on at least one of the zinc oxide injection path and phosphoric acid injection path, the programmable solenoid valve (15) being configured to allow or to block selectively the injection of zinc oxide or phosphoric acid into the reactor (17).

**FIGURE 1**

**FIGURE 2**

FIGURE 3

**FIGURE 4A**

(1)

(2)          (3)          (4)          (5)

**FIGURE 4B**

**FIGURE 4C**

**FIGURE 4D**

**P : 17,35%**
**Zn : 54,60%**
**O₂ : 24,67%**

**FIGURE 4E**

**P : 15,18%**
**Zn : 43%**
**O₂ : 29,59%**

**FIGURE 4F**

**FIGURE 4G**

FIGURE 5A

FIGURE 5B

I (u.a)

(a) : ZHPT
(b) : Zn$_{11}$(HPO$_3$)$_8$(OH)$_6$

**FIGURE 6**

I (u.a)

(a) : ZHPT
(c) : Zn(OH)$_2$
(d) : Zn$_3$(PO$_4$)$_2$, 2H$_2$O
(e) : Zn$_3$(PO$_4$)$_2$

**FIGURE 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5482526 A

- JP S56169113 A

**Littérature non-brevet citée dans la description**

- **F. LEMONT**. Procédés hautes températures; de la réactivité des systèmes au developpement et l'optimisation de technologies sensibles. *Habilitation à diriger des recherches, Institut National polytechnique de Grenoble*
- **J.R. YOUNG** ; **J.M. DIDYMUS** ; **P.R. BROWN** ; **S. MANN et al.** *Nature*, 1992, vol. 356, 516

- **K.HENRIKSEN** ; **S.L.S. STIPP** ; **J.R. YOUNG** ; **P.R. BROWN**. *Am. Mineralogist*, 2003, vol. 88, 2040
- **A. RIOU** ; **R. CUDENNEC** ; **Y. GERNAULT**. Hydrogénophosphate de zinc hydrate. *Acta cryst*, 1987, vol. C43, 194-197